# EUROPEAN PATENT APPLICATION

(11) **EP 4 534 344 A1**
(43) Date of publication of application: **09.04.2025**
(21) Application number: 24194436.2
(22) Date of filing: 14.08.2024
(51) Int. Cl.: B60N 2/00, B60N 2/01, B60N 2/02, B60N 2/06, B60N 2/26

(54) **SEAT FOR VEHICLE**

(30) Priority: 05.10.2023 KR 20230132779
(71) Applicant: Hyundai Mobis Co., Ltd., Gangnam-gu Seoul 06141 (KR)
(72) Inventor: HWANGBO, Tae Young, 17003 Yongin-si, Gyeonggi-do (KR)
(74) Representative: Jung, Minkyu

(57) **Abstract**

Provided is a seat for a vehicle that includes a passenger seat occupied by a passenger, an independent seat positioned behind the passenger seat and operated independently from rear seats, and a sliding rail provided on the vehicle floor in the longitudinal direction of the vehicle, in which the passenger seat and the independent seat are coupled, allowing for independent sliding.

## Description

### BACKGROUND OF THE DISCLOSURE

### Field of the Disclosure

The present disclosure relates to a seat for a vehicle.

### Description of the Related Art

Generally, seats for a vehicle are provided to adjust the inclination of the seatback, the position of the seat, and the height of the seat to accommodate the diverse body types of the driver or occupants in the vehicle.

An infant or child under the age of 6 may ride in a vehicle. For safety reasons, the infant or child is seated in the car seat installed separately on the seat. In particular, car seats are generally installed in the rear seats behind the driver seat and the passenger seat. The driver is forced to pay attention to the infant or child in the rear car seat, which distracts the driver's attention to the front and rear of the vehicle, increasing the risk of danger while driving.

Therefore, the demand arises for a vehicle seat that provides better stability for attending to infants or children.

It should be understood that the foregoing description of the background art is merely for the purpose of promoting an understanding of the background of the present disclosure and is not to be construed as an admission that the prior art is known to those skilled in the art.

### SUMMARY OF THE DISCLOSURE

The present disclosure has been made keeping in mind the above problem occurring in the related art, and the present disclosure is intended to provide a seat for a vehicle that allows a driver to stably attend to infants or children.

To achieve the object, the seat for a vehicle according to the present disclosure includes a passenger seat, an independent seat positioned behind the passenger seat and operated independently from rear seats, and a sliding rail disposed on a vehicle floor in a longitudinal direction of the vehicle, in which each of the passenger seat and the independent seat is coupled to the sliding rail, so as to independently slide on the sliding rail.

The seat for a vehicle may include a switch configured to slide at least one of the passenger seat or the independent seat, and a controller configured to control at least one of the passenger seat or the independent seat to slide or to inquire whether to slide the at least one of the passenger seat or the independent seat based on at least one of the following factors: operations of the switch; the weight detected from the passenger seat or the independent seat; or crying sound of an infant or child detected in the vehicle.

The controller may slide the passenger seat and the independent seat to a rear in response to detecting a presence of the infant or child in the passenger seat.

The controller may turn off a passenger airbag or inquire whether to turn off the passenger airbag in response to detecting a presence of the infant or child in the passenger seat.

The controller may slide the passenger seat and the independent seat to the front in response to detecting a presence of the infant or child in the independent seat.

The passenger seat and the independent seat may be positioned at a certain distance apart.

The controller may turn on a curtain airbag or inquire whether to turn on the curtain airbag in response to detecting a presence of the infant or child in the passenger seat or the independent seat.

An AVN system may be further included. The controller may inquire whether to slide the passenger seat or the independent seat through the AVN system in response to detecting a presence of the infant or child in the passenger seat or the independent seat.

According to the seat for a vehicle of the present disclosure, the driver may adjust the position of the passenger seat or the independent seat to stably attend to infants or children. Adjusting the position of the passenger seat or the independent seat allows for effective utilization of the space in the vehicle.

### BRIEF DESCRIPTION OF THE DRAWINGS

FIG. 1 is a layout view of a seat for a vehicle according to an embodiment of the present disclosure.
FIG. 2 illustrates a position of a passenger seat and an independent seat corresponding to Embodiment 1 of the present disclosure.
FIG. 3 illustrates a position of a passenger seat and an independent seat corresponding to Embodiment 2 of the present disclosure.
FIG. 4 illustrates a position of a passenger seat and an independent seat corresponding to Embodiment 3 of the present disclosure.
FIG. 5 is a front view and a side view of a switch provided inside a vehicle.

### DETAILED DESCRIPTION OF THE DISCLOSURE

Hereinafter, embodiments disclosed in the present specification will be described in detail with reference to the accompanying drawings. The same or similar constituent elements are assigned with the same reference numerals regardless of reference numerals, and the repetitive description thereof will be omitted.

In the description of the embodiments disclosed in the present specification, the specific descriptions of publicly known related technologies will be omitted when it is determined that the specific descriptions may obscure the subject matter of the embodiments disclosed in the present specification. In addition, it should be interpreted that the accompanying drawings are provided only to allow those skilled in the art to easily understand the embodiments disclosed in the present specification, and the technical spirit disclosed in the present specification is not limited by the accompanying drawings, and includes all alterations, equivalents, and alternatives that are included in the spirit and the technical scope of the present disclosure.

The terms including ordinal numbers such as "first," "second," and the like may be used to describe various constituent elements, but the constituent elements are not limited by the terms. These terms are used only to distinguish one constituent element from another constituent element.

Singular expressions include plural expressions unless clearly described as different meanings in the context.

In the present specification, it should be understood the terms "comprises," "comprising," "includes," "including," "containing," "has," "having" or other variations thereof are inclusive and therefore specify the presence of stated features, integers, steps, operations, elements, components, or combinations thereof, but do not preclude the presence or addition of one or more other features, integers, steps, operations, elements, components, or combinations thereof.

When one constituent element is described as being "coupled" or "connected" to another constituent element, it should be understood that one constituent element can be coupled or connected directly to another constituent element, and an intervening constituent element can also be present between the constituent elements. On the other hand, when one constituent element is described as being "directly connected" or "directly connected" to another component, it should be understood that there are no other components in between.

A controller may include a communication device configured to communicate with another control unit or a sensor to control a corresponding function, a memory configured to store an operating system, a logic instruction, and input/output information, and one or more processors configured to perform determination, computation, decision, or the like required to control the corresponding function.

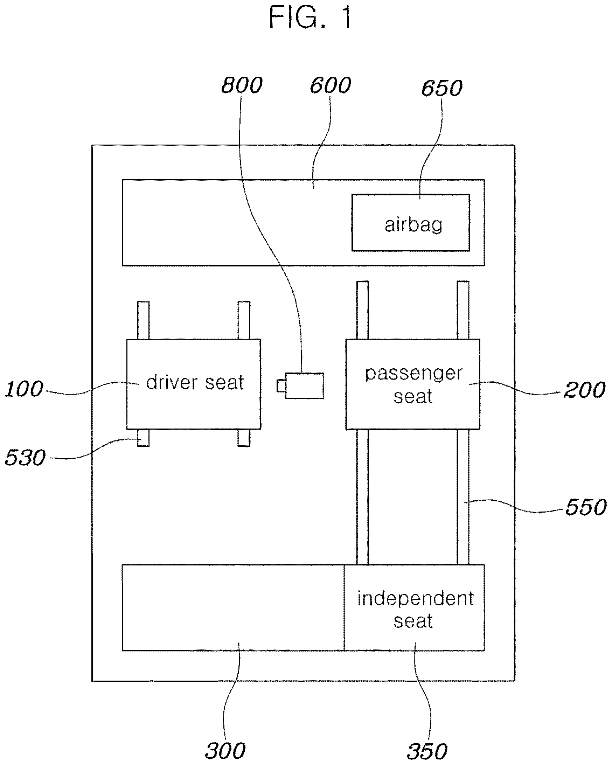

FIG. 1 is a layout view of a seat for a vehicle according to an embodiment of the present disclosure. With reference to FIG. 1, the interior of the vehicle includes a driver seat 100 occupied by the driver, a passenger seat 200 positioned alongside the driver seat, and rear seats 300 positioned behind both the driver seat 100 and the passenger seat 200. Among the rear seats 300, an independent seat 350 may be provided in the rear of the passenger seat 200, operating independently from the rear seats 300.

Both the driver seat 100 and the passenger seat 200 are coupled to sliding rails 530 and 550 provided on the vehicle floor in the longitudinal direction of the vehicle. The driver and passenger seats, coupled to the sliding rails 530 and 550, respectively, slide on the sliding rails 530 and 550 through seat adjustments by the driver and occupants, allowing the occupants to adjust the seat position to fit their bodies.

The rear seats 300 are typically fixed to the floor of the vehicle. According to the present disclosure, among the rear seats 300, the rear seat, positioned behind the passenger seat 200, is equipped with the independent seat 350 that may operate independently. Specifically, the sliding rail 550 to which the passenger seat 200 is coupled extends longitudinally along the vehicle so that the independent seat 350 is also coupled to the sliding rail 550.

Accordingly, the occupants of the vehicle may adjust the position of the passenger seat 200 as well as the independent seat 350 on the sliding rail 550. The position of the passenger seat 200 and the independent seat 350 may be arbitrarily adjusted. Embodiments of adjusting the position of the passenger seat 200 and the independent seat 350 will be described below.

### Embodiment 1

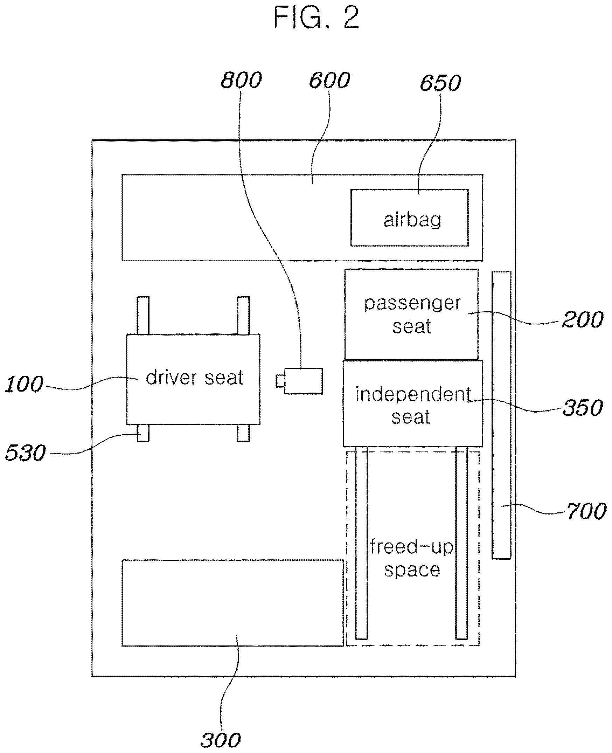

FIG. 2 illustrates a position of a passenger seat and an independent seat corresponding to Embodiment 1 of the present disclosure. In Embodiment 1, the passenger seat 200 and the independent seat 350 are positioned as close to the front as possible. Positioning the passenger seat 200 and the independent seat 350 as far forward as possible allows for freeing up rear space for the independent seat 350. According to Embodiment 1, the additional freed-up space in the vehicle may be utilized in a variety of ways.

### Embodiment 2

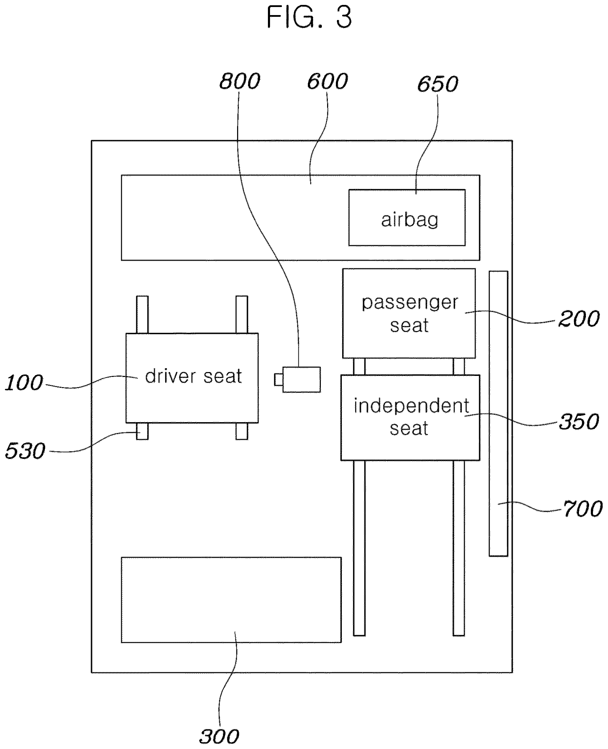

FIG. 3 illustrates a position of a passenger seat and an independent seat corresponding to Embodiment 2 of the present disclosure. In Embodiment 2, the passenger seat 200 is positioned as close to the front as possible, and the independent seat 350 is positioned at a certain distance behind the passenger seat 200. The independent seat 350 may be equipped with a car seat for seating an infant or child.

The infant or child under the age of 6 may ride in a vehicle with a driver. For safety reasons, the infant or child is seated in the car seat installed separately on the seat. The driver is forced to pay attention to the infant or child in the car seat installed on the independent seat 350, which distracts the driver's attention to the front and rear, increasing the risk of danger while driving.

According to Embodiment 2, the independent seat 350 may be positioned closer to the side of the driver seat, allowing the infant or child to be placed closer to the driver's body. Accordingly, the driver's psychological comfort increases as the physical distance from the infant or child is closer, leading to safer driving.

Furthermore, as in Embodiment 1, the space behind the independent seat 350 may be utilized. However, according to Embodiment 2, when the car seat is installed on the independent seat 350, the passenger seat 200 and the independent seat 350 are positioned at a certain distance apart. This is to protect the infant or child from impacts and vibrations by preventing direct contact between the passenger seat 200 and the independent seat 350.

### Embodiment 3

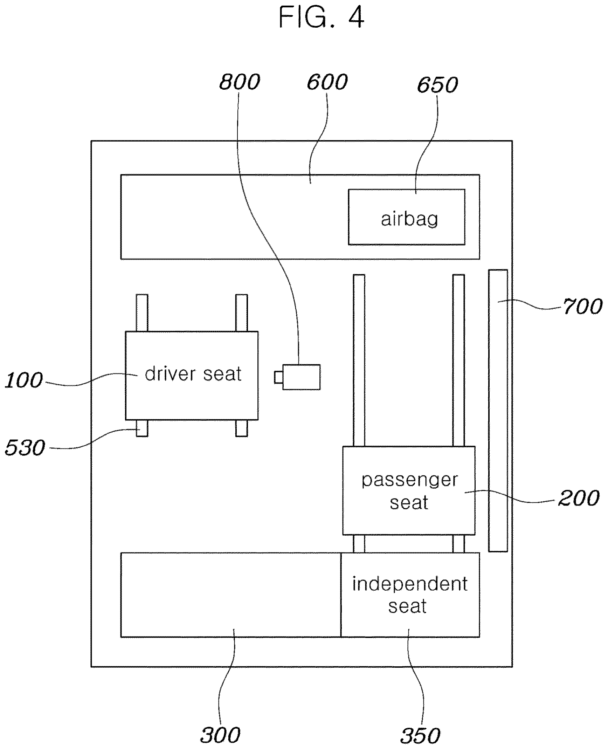

FIG. 4 illustrates a position of a passenger seat and an independent seat corresponding to Embodiment 3 of the present disclosure. In Embodiment 3, the independent seat 350 is positioned at the rearmost, and the passenger seat 200 is positioned at the rear. The passenger seat 200 is positioned behind the driver seat 100, and the passenger seat 200 may be equipped with a car seat for seating an infant or child.

According to Embodiment 3, as in Embodiment 2, the infant or child may be placed closer to the driver's body. Accordingly, the driver's psychological comfort increases as the physical distance from the infant or child is closer, leading to safer driving.

In general, there are cases where the passenger seat 200 has greater operational functionality than the rear seat 300 (e.g., a heated seat or ventilated seat is not applied to the rear seat, but is applied only to the driver seat and passenger seat), which may result in installing a car seat on the passenger seat 200 to seat the infant or child. Thus, when it is necessary to seat a child in the passenger seat 200, the independent seat 350 may be positioned closer to the rear, and the passenger seat 200 may be positioned to the side-rear of the driver seat 100 to utilize the inherent seat functionality of the passenger seat 200.

Meanwhile, a dashboard 600 located in front of the passenger seat 200 may be equipped with a passenger airbag 650 to protect a passenger seated in the passenger seat 200. The driver or occupants may turn on or off the activation feature of the passenger airbag 650, depending on the situation. For example, in the cases of Embodiments 1, 2, and 3, the passenger airbag 650 activation feature may be turned off. In Embodiment 1, the passenger airbag 650 activation feature may be turned off when there is no passenger seated. In Embodiments 2 and 3, the passenger airbag 650 activation feature may be turned off to protect the infant or child seated in the car seat.

As will be described later, the on-off of the passenger airbag 650 activation feature may be controlled by detecting whether a passenger is present, whether a car seat is installed, and whether an infant or child is present.

A switch 800 may be provided inside the vehicle to slide at least one of the passenger seat 200 or the independent seat 350, and a controller may be provided to slide or inquire whether to slide at least one of the passenger seat 200 or the independent seat 350 based on at least one of the following factors: operations of the switch 800; the weight detected from the passenger seat 200 or the independent seat 350; and crying sound of an infant or child detected in the vehicle.

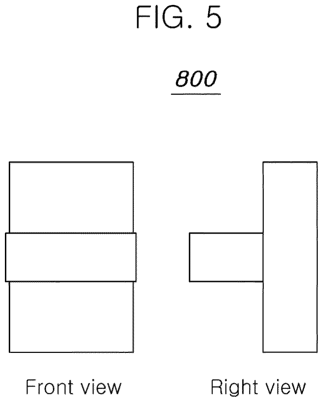

FIG. 5 is a front view and a side view of the switch provided inside a vehicle.

The switch 800 may be provided on the center fascia or center console inside the vehicle, and the driver may operate the switch and slide at least one of the passenger seat 200 or the independent seat 350 forward and backward. For example, pressing the switch briefly forward may move the passenger seat 200 forward, and pressing the switch briefly backward will move the passenger seat 200 backward. On the other hand, pressing the switch forward for a long time may move the independent seat 350 forward, and pressing the switch backward for a long time may move the independent seat 350 backward.

The controller may detect the operation of the switch 800 and slide at least one of the passenger seat 200 or the independent seat 350.

The controller may slide or inquire whether to slide at least one of the passenger seat 200 or the independent seat 350 based on at least one of the following factors: the operations of the switch; the weight detected from the passenger seat 200 or the independent seat 350 in the vehicle; and the crying sound of an infant or child detected in the vehicle.

Specifically, the controller may obtain information about the car seat installation and the infant or child presence based on the weight detected from the passenger seat 200 or independent seat 350 in the vehicle, and may automatically slide the passenger seat 200 or the independent seat 350, or may inquire whether to slide.

Additionally, through a microphone installed inside the vehicle, the controller may detect the crying sound of an infant or child. When the crying sound of an infant or child are detected, either the passenger seat 200 or the independent seat 350 may be slid. When the crying sound of an infant or child are detected, the infant-occupied seat may be slid to the side of the driver seat 100 so that the driver may attend to the infant or child. When the noise decreases, or when there is less infant movement detected from the seat, it is determined that the infant or child is sleeping, and the infant-occupied seat may be slid back to the rear.

Additionally, when it is determined that the infant or child is sleeping, the controller may minimize the volume of the audio emitted from the vehicle.

An Audio, Video, Navigation (AVN) system may be further provided inside the vehicle. When the presence of an infant or child in the passenger seat 200 or the independent seat 350 is detected, the controller may inquire through the AVN whether to slide the passenger seat 200 or the independent seat 350. When the crying sound of an infant or child are detected, the controller may inquire through the AVN system whether to slide the passenger seat 200 or the independent seat 350 to the side of the driver seat 100. When it is determined that the infant or child is sleeping, the controller may inquire whether to slide the passenger seat 200 or the independent seat 350 to the rear of the driver seat.

When the presence of an infant or child in the passenger seat 200 is detected, the controller may automatically turn off the operation of the passenger airbag 650 or inquire whether to turn off the operation of the passenger airbag 650 through the AVN system.

The vehicle may further include a curtain airbag 700 to protect occupants from side collisions. When the presence of an infant or child in the passenger seat 200 or independent seat 350 is detected, the controller may turn on or inquire whether to turn on the curtain airbag 700, similar to the case of the passenger airbag 650.

While the specific embodiments of the present disclosure have been illustrated and described, it will be obvious to those skilled in the art that the present disclosure may be variously modified and changed without departing from the technical spirit of the present disclosure defined in the appended claims.

## Claims

1. A seat for a vehicle comprising:
a passenger seat;
an independent seat positioned behind the passenger seat and operated independently from rear seats; and
a sliding rail, disposed on a vehicle floor in a longitudinal direction of the vehicle,
wherein each of the passenger seat and the independent seat is coupled to the sliding rail, so as to independently slide on the sliding rail.

2. The seat for a vehicle of claim 1 further comprising:
a switch configured to slide at least one of the passenger seat or the independent seat; and
a controller configured to control at least one of the passenger seat or the independent seat to slide or to inquire whether to slide the at least one of the passenger seat or the independent seat based on at least one of the following factors: operations of the switch; weight detected from the passenger seat or the independent seat; or crying sound of an infant or child detected in the vehicle.

3. The seat for a vehicle of claim 2,
wherein the controller slides the passenger seat and the independent seat to a rear in response to detecting a presence of the infant or child in the passenger seat.

4. The seat for a vehicle of claim 2 or 3,
wherein the controller turns off a passenger airbag or inquires whether to turn off the passenger airbag in response to detecting a presence of the infant or child in the passenger seat.

5. The seat for a vehicle of any one of claims 2 to 4,
wherein the controller slides the passenger seat and the independent seat to the front in response to detecting a presence of the infant or child in the independent seat.

6. The seat for a vehicle of any one of claims 1 to 5,
wherein the passenger seat and the independent seat are positioned at a certain distance apart.

7. The seat for a vehicle of any one of claims 2 to 6,
wherein the controller turns on a curtain airbag or inquires whether to turn on the curtain airbag in response to detecting a presence of the infant or child in the passenger seat or the independent seat.

8. The seat for a vehicle of any one of claims 2 to 7, further comprising
an AVN (Audio, Video, Navigation) system,
wherein the controller inquires whether to slide the passenger seat or the independent seat through the AVN system in response to detecting a presence of the infant or child in the passenger seat or the independent seat.
